Europäisches Patentamt

European Patent Office

Office européen des brevets

(19)

(11) Veröffentlichungsnummer : **0 500 623 B1**

# (12) EUROPÄISCHE PATENTSCHRIFT

(45) Veröffentlichungstag der Patentschrift :
**13.04.94 Patentblatt 94/15**

(21) Anmeldenummer : **90916256.2**

(22) Anmeldetag : **05.11.90**

(86) Internationale Anmeldenummer :
**PCT/EP90/01848**

(87) Internationale Veröffentlichungsnummer :
**WO 91/06614 16.05.91 Gazette 91/11**

(51) Int. Cl.⁵ : **C09K 21/04, B27K 3/52,
C08K 13/00**

(54) **ZUSATZMATERIAL ZU KUNSTSTOFFSCHAUM UND ZU EINEM AUS LIGNOZELLULOSEHALTIGEN STOFFEN GEPRESSTEN HOLZWERKSTOFF.**

Die Akte enthält technische Angaben, die nach dem Eingang der Anmeldung eingereicht wurden und die nicht in dieser Patentschrift enthalten sind.

(30) Priorität : **06.11.89 DE 3936886**

(43) Veröffentlichungstag der Anmeldung :
**02.09.92 Patentblatt 92/36**

(45) Bekanntmachung des Hinweises auf die Patenterteilung :
**13.04.94 Patentblatt 94/15**

(84) Benannte Vertragsstaaten :
**AT BE CH DE DK ES FR GB GR IT LI LU NL SE**

(56) Entgegenhaltungen :
**EP-A- 0 277 932
WO-A-89/08137
DE-A- 2 942 788
US-A- 2 935 471**

(56) Entgegenhaltungen :
**Ullmanns Encyklopädie der Technischen Chemie, 4. Auflage, 1979, Bd. 7, S. 524; Bd. 12, S. 505 und Bd. 18, S. 349, 350.
CHEMICAL ABSTRACTS, vol. 101, no. 16, October 15, 1984, Columbus, Ohio, US; A. FOJUTOWSKI et al.: "Thermogravimetric study of wood treated with fireretardants", p. 116, abstract no. 132 7421f
CHEMICAL ABSTRACTS, vol. 92, no. 26, June 30, 1980, Columbus, Ohio, US; Y.S. BAE: "Physical properties and fireretardancy of plywoods treated by ammonium salts and orthophosphoric acid", p. 86, abstract no. 216 970**

(73) Patentinhaber : **BHF-CHEMIE BRANDHEMMENDE FÜLLSTOFFE GMBH
Heussstrasse 8
D-76351 Linkenheim-Hochstetten (DE)**

(72) Erfinder : **WIEHN, Helmut
Waldstr. 13
D-6742 Herxheim-Weyher (DE)**

(74) Vertreter : **Trappenberg, Hans
Trappenberg u. Dimmerling, Postfach 21 13 75
D-76163 Karlsruhe (DE)**

EP 0 500 623 B1

**Beschreibung**

Die Erfindung betrifft ein sowohl bei der Herstellung von Kunststoffschäumen wie auch insbesondere bei der Herstellung von Holzwerkstoffplatten oder -Formteilen einsetzbares, zur Verminderung der Formaldehydabgabe wie auch zum Brandschutz dienendes Zusatzmaterial, das den Ausgangsrohstoffen - Holzfasern oder Holzspänen oder anderen in dieser Form vorliegenden lignozellulosehaltigen Stoffen, die mit Harnstoff-Formaldehyd-Kondensat- oder Isocyanat-Bindemitteln beleimt, geschüttet und sodann in einer Heißpresse verpreßt werden - beizumengen sind.

Bei der Herstellung von mitteldichten Faserplatten (MDF-Platten) wie auch von Spanholz-Platten, sowohl bei Flachpreß-Platten wie auch bei Strangpreß-Platten oder Formkörpern, werden härtbare Kunstharz-Leime als Bindemittel eingesetzt, insbesondere Harnstoff-Formaldehyd-Kondensate wie auch Melamin-Formaldehyd-Kondensate. Diese Kunstharz-Leime werden als kolloidale Lösungen geliefert, wobei die Größe der dispergierten Teilchen bei 1/100 µm bis 1/10000 µm liegt. Diese Lösung, als "Sole" bezeichnet, enthält neben dem Lösungsmittel Wasser auch Harnstoff- beziehungsweise Melamin-Formaldehyd-Kondensate, bei denen jedoch die Polykondensationsreaktion unterbrochen ist. Diese unterbrochene Polykondensationsreaktion wird als chemische Reaktion beim Heißpressen der Spanplatten fortgesetzt, zusammen mit der physikalischen Entfernung des Wassers aus der Leimfuge. Hierbei ist der Ablauf und die Geschwindigkeit der chemischen Reaktion der Leimkörper, insbesondere beim Harnstoff-Formaldehyd-Kondensat in starkem Maße abhängig von dem pH-Wert; die Einstellung dieses pH-Wertes erfolgt durch Zugabe eines das notwendige saure Milieu herstellenden Härters.

Neben dieser Härterzugabe, die bei Melamin-Harnstoff-Kondensaten im allgmeinen nicht notwendig ist, ist die chemische Reaktion der Kondensat-Partner abhängig von dem Mol-Verhältnis, das bei Harnstoff-Formaldehyd-Kondensaten, um eine schnelle und volle Auskondensation der Partner zu erreichen, bei 1:2 (Harnstoff: Formaldehyd) liegen sollte. Unter solchen Voraussetzungen, bei sorgfältiger Einhaltung des gewünschten Molverhältnisses, der Temperatur-, Zeit- und pH-Wert-Bedingung entsteht zunächst Monomethylol- und Dimethylol-Harnstoff, und entstehen sodann, durch Kondensation miteinander oder mit Harnstoff, Gemische von Kondensationsprodukten, die Ätherbrücken oder Methylenbrücken enthalten. Aus diesen noch wasserlöslichen Verbindungen entwickeln sich bei durch die Wärmeeinwirkung fortschreitender Reaktion verzweigte und schließlich vernetzte Kondensate. In den wasserunlöslichen ausgehärteten Harnstoff-Fosmaldehyd-Kondensaten sind die Harnstoffmoleküle zu einem dreidimensionalen Netzwerk verknüpft, wodurch sich die hohen Bindekräfte ergeben.

Das oben angeführte Molverhältnis von 1:2 hat den Nachteil, daß nach der Fertigstellung der Platten noch freies Formaldehyd vorhanden ist, das nach und nach an die Umgebung abgegeben wird. Dieses stechend riechende Gas mindert jedoch nicht nur die Verwertbarkeit der so aus Holzwerkstoff hergestellten Platten, sondern kann auch durch Einatmen zu Vergiftungserscheinungen führen. Um zumindest die Menge des noch in der Platte verbleibenden Fomaldehyds zu begrenzen, beschritt man bisher den Weg, das Molverhältnis zu verringern, bis hinab zu einem Verhältnis von 1:1,08. Bei einem solchen Molverhältnis ist zwar in der Praxis der verbleibende freie Rest von Formaldehyd nahezu bedeutungslos, jedoch verzögert dieser geringe Formaldehydanteil in dem Harnstoff-Formaldehyd-Kunstharzleim nicht nur die Polykondensation, sondern auch den Aufbau des oben angeführten dreidimensionalen Netzwerkes und damit die Festigkeit des Bindemittels. In der Praxis wird daher ein Molverhältnis angestrebt, das bei oder unter 1:1,3 liegt, bei dem die Menge des freien noch in der Spanplatte verbleibenden und nach und nach abgegebenen Formaldehyds gerade noch hingenommen werden kann, wobei sich jedoch noch befriedigende Festigkeitsverhältnisse ergeben. Weitere Möglichkeiten zur Verminderung der Formaldehydabgabe, die jedoch von der Industrie nicht oder nur in geringem Maße aufgenommen wurden, sind beispielsweise den DE-OSen 34 43 002 und 37 33 630, den DE-PSen 10 55 806 und 27 40 207 sowie auch der EP-B 150 420 zu entnehmen.

Eine erste Aufgabe der Erfindung ist es damit, eine Möglichkeit anzugeben, wie die Menge des noch in dem Holzwerkstoff verbleibenden Formaldehyds trotz eines gute Fertigungsmöglichkeiten ergebenden Molverhältnisses von 1:1,3 oder höher und entsprechenden hohen Festigkeiten des Endprodukts soweit minimiert werden kann, daß eine Beeinträchtigung der Umgebung durch entweichendes Formaldehydgas nicht mehr gegeben ist. Bei mit Isocyanat verleimten Werkstoffen wie auch bei Kunststoffschäumen stellt sich selbstverständlich dieses Problem nicht, da dort eine Formaldehydabgabe nicht erfolgt.

Für einen Großteil der Spanplattenanwendung wie auch derjenigen von Kunststoffschäumen wäre eine flammwidrige bis brandgeschützte Ausstattung äußerst zweckmäßig. Schwerentflammbare Spanplatten gemäß der verschiedenen geltenden Normen, wie zum Beispiel der CSE RF 3/77 Klasse I für Italien, der NF P 92/501 M 1 für Frankreich, der BS 476, Part 7 class 1 und BS 476, Part 6 class 0 für Großbritannien und DIN 4102 B 1 für Deutschland, bei denen der Brandschutz durch Beimengung von Brandschutzmitteln erreicht wird, sind zwar an sich bekannt. Hier wären beispielsweise zu nennen die europäische Patentanmeldung 03 51 670,

2

die EP-B 01 64 555 oder auch die DE-PSen 28 31 633 und 33 46 908. Diese Brandschutzmittel liegen fast ausschließlich in Form von Salzen vor, so Brom und die Bromate, Bor und die Borate, Phosphate, Sulfate und ähnliche. Diese Salze werden in pulvriger Form mit einer Pulverkorngröße bis maximal 50 µm auf den Markt gebracht. Alle diese Verfahren und Anwendungen, soweit sie überhaupt einen bemerkbaren Brandschutz bewirken, sind jedoch äußerst unwirtschaftlich und vermindern teilweise auch die Festigkeit des fertigen Werkstoffes.

Damit stellt sich der Erfindung eine zweite Aufgabe, nämlich ein geeignetes Brandschutzmittel anzugeben, das infolge seiner Wirkstoffkombination eine effektive Brandschutzwirkung zeigt, jedoch keinesfalls die Eigenschaften der Kunststoffschäume beziehungsweise diejenige der Holzwerkstoffe beeinträchtigt, insbesondere nicht die Verleimung der einzelnen Stoffe behindert beziehungsweise die Festigkeit des Werkstoffs mindert.

Beide Aufgaben werden gelöst durch ein Zusatzmaterial, das gekennzeichnet ist durch eine als Granulat mit einer Korngröße von 80 µm bis 1500 µm vorliegende Wirkstoffkombination aus

5 bis 90 GW% einer Teilkombination A

2 bis 65 GW% einer Teilkombination B

1 bis 65 GW% einer Teilkombination C

und

0 bis 80 GW% einer Teilkombination D

wobei die Teilkombination A aus

5 bis 100 GW% Monoammoniumdihydrogenphosphat,

0 bis 85 GW% Borsäure,

0 bis 25 GW% Ammoniumborat,

die Teilkombination B aus

1 bis 100 GW% Diammoniumhydrogenphosphat,

0 bis 90 GW% Natriumtetraborat (deca- und/oder pentahydrat),

die Teilkombination C aus

0 bis 35 GW% Ammoniumcarbonat,

1 bis 100 GW% Ammoniumsulfat,

0 bis 17,5 GW% Ammoniumamidosulfonat und

die Teilkombination D aus

0 bis 60 GW% Melamin,

0 bis 25 GW% Dimelaminphosphat,

1 bis 100 GW% Harnstoff

0 bis 100 GW% Aluminium(III)hydroxid und

0 bis 15 GW% Guanidinphosphat

besteht.

Wie Versuche gezeigt haben, werden die durch die Erfindung zu lösenden beiden Aufgaben tatsächlich in hervorragender und zudem wirtschaftlicher Weise gelöst. So wird nicht mehr zur Verminderung der Formaldehydgasabgabe das Molverhältnis von Harnstoff:Formaldehyd in die Festigkeit und die chemische Reaktion beeinträchtigender Weise vermindert, sondern es wird . ein günstiges Molverhältnis zwischen diesen beiden Reaktionspartnern beibehalten, jedoch dafür gesorgt, daß nach der chemischen Reaktion beziehungsweise dem Abbinden des Leimes das nun noch freie Formaldehyd abgefangen beziehungsweise durch das Zusatzmaterial gebunden wird. Wichtig ist hierbei, daß das Zusatzmaterial in erfindungsgemäßer Weise als Granulat in grober Körnung beigemengt wird, wodurch sich dieses Zusatzmaterial durch die relative Verminderung seiner Oberfläche zu seinem Volumen deutlich später erwärmt beziehungsweise deutlich später erst eine Reaktion mit Formaldehyd eingeht. Damit sind zwei ineinander übergehende Preßphasen des Holzwerkstoffs zu erkennen, eine erste Phase zu Beginn der Heißpressung, bei der die feindispergierten Harnstoff-Formaldehyd-Vorkondensate sofort unter Wärmeeinwirkung zu einem Netzwerk kondensieren und eine zweite Phase, bei der, nachdem die Wärme auch die in grober Körnung vorliegenden Zusatzmaterialien erreicht hat, die Kondensation dieser Zusatzmaterialien mit dem jetzt noch freien Formaldehyd ohne jede Beeinträchtigung der zuvor stattgefundenen Beleimung erfolgt. Versuche haben gezeigt, daß derart hergestellte Spanplatten tatsächlich praktisch formaldehydgasfrei sind und trotzdem eine außerordentliche Festigkeit aufweisen.

Jedoch auch die Kombination der angeführten Wirkstoffe trägt dazu bei, die Formaldehydgasabgabe zu verhindern. Diese Wirkung ist insbesondere den stickstoffhaltigen Einzelmaterialien des Zusatzmaterials zuzuschreiben, die harnstoffartig mit dem Formaldehyd reagieren.

Darüber hinaus ergibt sich jedoch durch diese Wirkstoffkombination ein hervorragender Brandschutz, wobei die Kombination so gewählt werden kann, daß entweder mehr der Brandschutz oder mehr das Abfangen des freien Formaldehydgases im Vordergrund steht. Generell könnte von drei Wirkungsbereichen gesprochen werden, einer

Minderung der Formaldehydabgabe mit verhältnismäßig geringer, schwerentflammbarer Ausstattung,
Minderung der Formaldehydabgabe mit hoher, schwerentflammbarer Ausstattung und
reine Brandschutzausstattung, beispielsweise bei Kunststoffschäumen und bei Isocyanat verleimten Holzwerkstoffen. Im ersten Falle, wo also die Verminderung der Formaldehydabgabe im Vordergrund steht, sollen 2 % bis 25 % des erfindungsgemäßen Zusatzmaterials, bezogen auf die Festharzmenge, beigegeben werden, in den beiden weiteren Fällen 8 GW% bis 18 GW%, bezogen auf das Gewicht des fertigen Kunststoffbeziehungsweise Holzwerkstoffs. Für Spezialwerkstoffe können auch höhere Zugaben erfolgen.

Die Stoffe der Wirkstoffkombination liegen üblicherweise in Pulverform mit einer Pulverkorngröße, die deutlich unter 80 μm liegt, vor. Um die gewünschte Korngröße zu erreichen und eine innige Mischung der einzelnen Anteile zu erzielen, wird nach der Erfindung vorgeschlagen, daß diese pulverförmigen Grundstoffe der Wirkstoffkombination trocken vermengt und danach trocken unter Druck kompaktiert und sodann zerkleinert werden. Statt dieses, allerdings sehr preiswerten Kompaktierens, können diese Stoffe auch mit einem wasserunlöslichen, jedoch die Festigkeit in der Leimfuge nicht behindernden Bindemittel auf die gewünschte Korngröße pelletiert werden. Möglich sind hierbei jedoch auch in richtiger Konsistenz, Viscosität und Menge beizufügende wasserlösliche Bindemittel, beispielsweise wasserlösliche Polymere. Unabhängig von der Art der Herstellung des Granulats empfiehlt es sich jedoch stets, dieses Granulat zu klassieren, einerseits um es den vorhandenen Geräten beziehungsweise Maschinen anzupassen, und andererseits, um die durch dieses erfindungsgemäße Zusatzmaterial beanspruchten Wirkungen - Abfangen des freien Formaldehydgases, Bewirken eines guten Brandschutzes - zu erreichen.

Eine weitere Möglichkeit, Zusatzmaterial verzögert zur Reaktion mit dem freien Formaldehyd abzugeben, besteht auch darin, das granulat- oder kristallförmig vorliegende Zusatzmaterial zu coaten. Hierbei wird das Zusatzmaterial-Granulat mit einem wasserlöslichen oder auf erhöhte Temperatur reagierenden Mantel umgeben, der vorerst die Reaktion mit Formaldehyd unterbindet. Erst beim Heißpressen des geschütteten Materials löst sich dieser Mantel entweder durch Einfluß von Wasserdampf oder von Wärme auf, so daß die Zusatzmaterialkörnchen frei werden und mit dem Formaldehyd reagieren können. Als Mantelmaterial können wiederum wasserlösliche Polymere (Kleister) Anwendung finden, oder auch bei erhöhter Temperatur wegschmelzende Paraffine.

Die Beimengung der erfindungsgemäßen Wirkstoffkombination zu den Ausgangsmaterialien für die Holzwerkstoffe kann nach der Erfindung vor, während oder nach dem Beleimen oder unmittelbar vor dem Schütten der beleimten Späne erfolgen. Nach der Erfindung ist es auch möglich, daß die Zugabe dieser Wirkstoffkombination über den Leim erfolgt. Da, wie die Praxis gezeigt hat, die Beimengung unproblematisch ist, kann sie auch in der Beleimmaschine vorgenommen werden, oder durch Einblasen entweder in das Stoffgemisch oder in ein trockenes Fasernetzwerk bei MHD-Holzwerkstoffen.

Der Einsatz der erfindungsgemäßen Wirkstoffkombination als Zusatzmaterial zu Holzwerkstoffen soll an den folgenden Beispielen erläutert werden:

1. Zusatzmaterial, mit einer Wirkstoffkombination, die insbesondere die Formaldehydabgabe hemmt (Formaldehydhemmender Füllstoff = FHF), bestehend aus:

```
A   7,5   GW%   Monammoniumdihydrogenphosphat
B   5,0   GW%   Diammoniumhydrogenphosphat
C   2,5   GW%   Ammoniumamidosulfonat
   33,5   GW%   Ammoniumsulfat
D  45,0   GW%   Harnstoff
    1,5   GW%   Dimelaminphosphat
    5,0   GW%   Melamin.
```

Die feinpulvrigen Einzelkomponenten wurden innig vermischt, kompaktiert, zerkleinert und in einem Granulatbereich zwischen 100 μm und 1100 μm klassiert. Das Granulat wurde am Eingang des Beleimmischers dem Holz zudosiert. In der untenstehenden Tabelle sind die Versuchsparameter und Ergebnisse einer so hergestellten Spanplatte angegeben und einer Platte, die ohne dieses Zusatzmaterial hergestellt wurde, gegenübergestellt.

4

|  | Platte mit Zusatzmaterial | Platte ohne Zusatzmaterial |
|---|---|---|
| Dicke [mm] | 19 | 19 |
| Rohdichte [kg/m ] | 675 | 665 |
| Leimtyp | UF | UF |
| Festharzdosierung [% auf atro Holz] | 10,0 | 10,0 |
| Wirkstoffmenge (FHF) [% auf atro Holz] | 0,52 | -- |
| Querzug [N/mm ] | 0,43 | 0,42 |
| Quellung 2 h [%] | 5,7 | 5,7 |
| Quellung 24 h [%] | 18 | 16 |
| Feuchte [%] | 5,7 | 5,6 |
| Perforator (photom.) [mg HCHO/100 g atro Platte] | 6,7 | 12,8 |

2. Zusatzmaterial zur Herstellung von Spanplatten mit brandhemmenden und Formaldehyd-Emission vermindernden Eigenschaften (Brandhemmender Füllstoff = BHF), bestehend aus einer Wirkstoffkombination aus

| A | 79,0 | GW% | Monammoniumdihydrogenphosphat |
|---|---|---|---|
| B | 9,0 | GW% | Diammoniumhydrogenphosphat |
| C | 6,5 | GW% | Ammoniumsulfat |
| D | 4,0 | GW% | Harnstoff |
|  | 1,0 | GW% | Guanidinphosphat |
|  | 0,5 | GW% | Dimelaminphosphat |

werden wie bei dem ersten Beispiel behandelt und in einem Bereich zwischen 100 µm und 800 µm klassiert. Das so erhaltene BHF-Granulat wurde am Eingang des Beleimmischers dem Holz zudosiert. Auch hier sind wieder in der untenstehenden Tabelle die Versuchsparameter und Ergebnisse dargestellt und einer Platte gegenübergestellt, die ohne dieses Zusatzmaterial hergestellt wurde.

|                          | Platte mit Zusatzmaterial | Platte ohne Zusatzmaterial |
|--------------------------|---------------------------|----------------------------|
| Dicke [mm]               | 22                        | 22                         |
| Rohdichte [kg/m ]        | 692                       | 654                        |
| Leimtyp                  | MUF                       | MUF                        |
| Festharzdosierung [% auf atro Holz] | 10,9           | 10,8                       |
| Wirkstoffmenge (BHF) [% auf atro Holz] | 19,5        | --                         |
| Querzug [N/mm ]          | 0,49                      | 0,55                       |
| Quellung 2 h [%]         | 4,9                       | 2,6                        |
| Quellung 24 h [%]        | 14,7                      | 8,9                        |
| Feuchte [%]              | 7,1                       | 6,6                        |
| Perforator (photom.) [mg HCHO/100 g atro Platte] | 2,4 | 19,7                    |
| Brandschachttest gem. B1 DIN 4102 max. Rauchgastemperatur [°C] | 124 | > 200         |
| Restlänge [cm]           | 23                        | 0                          |

Vergleichbare Werte ergaben sich auch bei Isocyanat verleimten Spanplatten.

3. Zusatzmaterial zur Herstellung von Spanplatten mit brandhemmenden und Formaldehyd-Emission vermindernden Eigenschaften (brandhemmender Füllstoff = BHF), bestehend aus einer Wirkstoffkombination aus

|   |        |     |                                   |
|---|--------|-----|-----------------------------------|
| A | 15,5   | GW% | Monammoniumdihydrogenphosphat     |
|   | 25,0   | GW% | Borsäure                          |
| B | 42,5   | GW% | Natriumtetraborat (pentahydrat)   |
|   | 2,0    | GW% | Diammoniumhydrogenphosphat        |
| C | 2,5    | GW% | Ammoniumsulfat                    |
|   | 1,5    | GW% | Ammoniumcarbonat                  |
| D | 9,0    | GW% | Harnstoff                         |
|   | 2,0    | GW% | Melamin                           |

werden in feinpulvriger Mischung innig vermengt, auf einem Pelletierteller mit Methylcellulose pelletiert und anschließend zu einem Granulat mit Korngrößen zwischen 200 µm und 600 µm klassiert. Beim Flottenansatz wurden 73 kg dieses Granulats auf 100 kg Rohleim (MUF, 65 % Festharz) eingerührt, wobei ein Absetzen durch kräftiges Rühren verhindert wurde. Mit dieser Flotte wurden die Späne über eine etwas erweiterte Leimdüse beleimt und anschließend wie üblich verarbeitet. Die erhaltenen Platten erreichten im Brandtest gemäß der italienischen Norm CSE RF 3/77 die Klasse I bei deutlich verminderter Formaldehydabgabe.

**Patentansprüche**

1.  Bei der Herstellung von sowohl Kunststoffschäumen wie auch insbesondere bei der Herstellung von Holzwerkstoffplatten oder -Formteilen einsetzbares, zur Verminderung der Formaldehydabgabe wie auch zum Brandschutz dienendes Zusatzmaterial, das den Ausgangsrohstoffen - Holzfaser und Holzspänen oder anderen, in dieser Form vorliegenden, lignozellulosehaltigen Stoffen, die mit Harnstoff-Formaldehyd-Kondensat- oder Isocyanat-Bindemitteln beleimt, geschüttet und sodann in einer Heißpresse verpreßt werden - beizumengen sind,

gekennzeichnet

durch eine als Granulat mit einer Korngröße von 80 μm bis 1500 μm vorliegende Wirkstoffkombination aus

        5 bis 90 GW% einer Teilkombination A,

        2 bis 65 GW% einer Teilkombination B,

        1 bis 65 GW% einer Teilkombination C und

        0 bis 80 GW% einer Teilkombination D,

wobei die Teilkombination A aus

        5 bis 100 GW% Monammoniumdihydrogenphosphat,

        0 bis 85 GW% Borsäure,

        0 bis 25 GW% Ammoniumborat,

die Teilkombination B aus

        1 bis 100 GW% Diammoniumhydrogenphosphat,

        0 bis 90 GW% Natriumtetraborat (deca- und/oder pentahydrat),

die Teilkombination C aus

        0 bis 35 GW% Ammoniumcarbonat,

        1 bis 100 GW% Ammoniumsulfat,

        0 bis 17,5 GW% Ammoniumamidosulfonat und

die Teilkombination D aus

        0 bis 60 GW% Melamin,

        0 bis 25 GW% Dimelaminphosphat,

        1 bis 100 GW% Harnstoff,

        0 bis 100 GW% Aluminium (III) hydroxid und

        0 bis 15 GW% Guanidinphosphat

besteht.

2.   Zusatzmaterial nach Anspruch 1,
dadurch gekennzeichnet,
daß die als Pulver < 80 μm vorliegenden Grundstoffe der Wirkstoffkombination trocken vermengt, danach trocken unter Druck kompaktiert und sodann zur gewünschten Korngröße zerkleinert sind.

3.   Zusatzmaterial nach Anspruch 1,
dadurch gekennzeichnet,
daß es unter Einsatz von wasserlöslichem Kleister als Bindemittel zu der gewünschten Korngröße pelletiert ist.

4.   Zusatzmaterial nach Anspruch 1, 2 oder 3,
dadurch gekennzeichnet,
daß es hinsichtlich seiner Korngröße klassiert ist.

5.   Zusatzmaterial nach Anspruch 1,
dadurch gekennzeichnet,
daß die granulierten oder pelletierten Partikel mit einem wasserlöslichen oder unter Temperatureinfluß schmelzenden Mantel umgeben (coated particles) sind.

6.   Zusatzmaterial nach Anspruch 5,
gekennzeichnet
durch ein aus wasserlöslichem Kleister oder Paraffin bestehenden Mantelmaterial (coating material).

7.   Verfahren zum Beimengen des Zusatzmaterials nach den Ansprüchen 1 bis 6,
dadurch gekennzeichnet,
daß die Beimengung vor, während oder nach dem Beleimen oder unmittelbar vor dem Schütten der beleimten Späne erfolgt.

8.   Verfahren zum Beimengen des Zusatzmaterials nach Anspruch 7,
dadurch gekennzeichnet,
daß die Beimengung durch Zugabe zum Leim erfolgt.

9.   Verfahren zum Beimengen des Zusatzmaterials nach Anspruch 7,

dadurch gekennzeichnet,
daß die Beimengung in der Beleimmaschine vorgenommen wird.

10. Verfahren zum Beimengen des Zusatzmaterials nach Anspruch 7,
dadurch gekennzeichnet,
daß die Beimengung durch Einblasen in das Stoffgemisch erfolgt.

11. Verfahren zum Beimengen des Zusatzmaterials nach Anspruch 7,
dadurch gekennzeichnet,
daß die Beimengung durch Einblasen in das trockene Fasernetzwerk erfolgt.

## Claims

1. An additive material which can be used in the production of both synthetic foams and also in particular in the production of wood material panels or shaped members and which serves to reduce formaldehyde emission and also for fire protection and which is to be added to the raw starting materials - wood fibres and wood chips or other lignocellulose-bearing substances which occur in that form and which are covered with urea-formaldehyde condensate or isocyanate binding agents, tipped, and then pressed in a hot press, characterised by an active material combination which is present in the form of a granular material with a grain size of from 80 μm to 1500 μm, comprising

    5 to 90% by weight of a sub-combination A,
    2 to 65% by weight of a sub-combination B,
    1 to 65% by weight of a sub-combination C and
    0 to 80% by weight of a sub-combination D,
wherein the sub-combination A comprises
    5 to 100% by weight of monoammonium dihydrogen phosphate,
    0 to 85% by weight of boric acid, and
    0 to 25% by weight of ammonium borate,
the sub-combination B comprises
    1 to 100% by weight of diammonium hydrogen phosphate, and
    0 to 90% by weight of sodium tetraborate (deca- and/or pentahydrate),
the sub-combination C comprises
    0 to 35% by weight of ammonium carbonate
    1 to 100% by weight of ammonium sulphate, and
    0 to 17.5% by weight of ammoniwm amidosulphonate, and
the sub-combination D comprises
    0 to 60% by weight of melamine,
    0 to 25% by weight of dimelamine phosphate,
    1 to 100% by weight of urea,
    0 to 100% by weight of aluminium (III) hydroxide, and
    0 to 15% by weight of guanidine phosphate.

2. An additive material according to claim 1 characterised in that the basic materials of the active material combination, which are present in the form of powder < 80 μm are mixed dry, thereafter compacted dry under pressure and then crushed to give the desired grain size.

3. An additive material according to claim 1 characterised in that it is pelleted to give the desired grain size, using water-soluble paste as the binding agent.

4. An additive material according to claim 1, claim 2 or claim 3 characterised in that it is graded in respect of its grain size.

5. An additive material according to claim 1 characterised in that the granulated or pelleted particles are surrounded with a coating which is water-soluble or which melts under the influence of temperature (coated particles).

6. An additive material according to claim 5 characterised by a coating material comprising water-soluble paste or paraffin.

7. A method of adding the additive material according to claims 1 to 6 characterised in that the addition operation is effected before, during or after the operation of covering the materials with glue or immediately before the operation of tipping the glue-covered chips.

8. A method of adding the additive material according to claim 7 characterised in that the addition operation is effected by addition to the glue.

9. A method of adding the additive material according to claim 7 characterised in that the addition operation is effected in the glue-covering machine.

10. A method of adding the additive material according to claim 7 characterised in that the addition operation is effected by blowing into the mixture of materials.

11. A method of adding the additive material according to claim 7 characterised in that the addition operation is effected by blowing into the dry fibre network.


**Revendications**

1. Adjuvant ou additif utilisable lors de la fabrication de mousses de matière plastique aussi bien qu'en particulier lors de la production de panneaux en bois ou de pièces ou parties conformées, cet additif servant à diminuer le dégagement de formaldéhyde et à protéger contre le feu, qui est incorporé aux matières brutes de départ - fibres de bois et copeaux de bois ou autres, matières présentes sous cette forme et contenant de la lignocellulose, qui ont été encollées avec un produit de condensation urée-formaldéhyde ou avec du liant à l'isocyanate, qui ont été empilées puis comprimées dans une presse de chauffage, additif caractérisé en ce qu'il consiste en une combinaison de substances actives, présentes sous forme d'un granulat ayant une grosseur de grain de 80 $\mu$m à 1 500 $\mu$m, combinaison consistant en :
5 à 90 % en poids d'une combinaison partielle A,
2 à 65 % en poids d'une combinaison partielle B,
1 à 65 % en poids d'une combinaison partielle C, et
0 à 80 % en poids d'une combinaison partielle D,
la combinaison partielle A consistant en :
5 à 100 % en poids de dihydrogénophosphate de monoammonium,
0 à 85 % en poids d'acide borique ,
0 à 25 % en poids de borate d'ammonium,
la composition partielle B consistant en :
1 à 10 % en poids d'hydrogénophosphate de diammonium,
0 à 90 % en poids de tétraborate de sodium (décahydraté et/ou pentahydraté),
la combinaison partielle C consistant en :
0 à 35 % en poids de carbonate d'ammonium,
1 à 100 % en sulfate d'ammonium,
0 à 17,5% en poids d'amidosulfonate d'ammonium et
la combinaison partielle D consistant en :
0 à 60 % en poids de mélamine,
0 à 25 % en poids de phosphate de dimélamine,
1 à 100% en poids d'urée,
0 à 100% en poids d'hydroxyde d'aluminium (III) et
0 à 15 % en poids de phosphate de guanidine.

2. Additif selon la revendication 1, caractérisé en ce que les substances de base de la combinaison des substances actives, présentes sous forme de poudre ayant moins de 80 $\mu$m, sont mélangées puis compactées sous pression à sec et fragmentées ensuite pour obtenir la grosseur voulue des grains.

3. Additif selon la revendication 1, caractérisé en ce qu'il est aggloméré ou pastillé à la grosseur voulue des grains, avec utilisation d'un empois hydrosoluble comme liant.

4. Additif selon la revendication 1, 2, ou 3 caractérisé en ce qu'il est soumis à un classement concernant la grosseur de ces grains.

5. Additif selon la revendication 1, caractérisé en ce que les particules granulées ou agglomérées ou pastillées sont entourées d'une enveloppe hydrosoluble ou d'une enveloppe fondant sous l'influence de la température ("coated particles").

6. Additif selon la revendication 5, caractérisé par une matière d'enveloppe consistant en un empois hydrosoluble ou de la paraffine ("coating materials").

7. Procédé pour incorporer l'additif selon les revendications 1 à 6, caractérisé en ce que l'incorporation a lieu, avant, pendant ou après l'encollage ou immédiatement avant l'empilement des copeaux encollés.

8. Procédé pour incorporer l'additif selon la revendication 7, caractérisé en ce que l'incorporation a eu lieu par addition à de la colle.

9. Procédé pour incorporer l'additif selon la revendication 7, caractérisé en ce que l'incorporation est réalisée dans la machine d'encollage.

10. Procédé pour incorporer l'additif, selon la revendication 7, caractérisé en ce que l'incorporation a lieu par insufflage dans le mélange des substances.

11. Procédé pour incorporer l'additif, selon la revendication 7, caractérisé en ce que l'incorporation a lieu par insufflage dans le réseau des fibres sèches.